Europäisches Patentamt

(19) European Patent Office

Office européen des brevets

(11) Numéro de publication: **0 053 953**
**A2**

(12) # DEMANDE DE BREVET EUROPEEN

(21) Numéro de dépôt: **81401699.4**

(22) Date de dépôt: **27.10.81**

(51) Int. Cl.³: **F 25 B 29/00**
**F 25 B 27/00, F 24 D 3/00**

---

(30) Priorité: **10.12.80 FR 8026250**

(43) Date de publication de la demande:
**16.06.82 Bulletin 82/24**

(84) Etats contractants désignés:
**AT BE CH DE GB IT LI LU NL SE**

(71) Demandeur: **RENAULT TECHNIQUES NOUVELLES**
**9-11, avenue du 18 juin 1940**
**F-92500 Rueil Malmaison(FR)**

(72) Inventeur: **Leorat, François**
**Boulevard de la Reine**
**F-78000 Versailles(FR)**

(72) Inventeur: **Legre, Jean-Marie**
**3, square Copernic Résidence Iena**
**F-78150 Le Chesnay(FR)**

(74) Mandataire: **Réal, Jacques**
**Régie Nationale des Usines Renault 8-10, avenue Emile Zola**
**F-92109 Boulogne Billancourt(FR)**

---

(54) **Procédé de régulation d'une pompe à chaleur travaillant sur une source froide à débit thermique limité et dispositif correspondant.**

(57) Procédé de régulation d'une pompe à chaleur (2) disposant d'un moteur d'entraînement à régime variable, en particulier un moteur thermique (1), et travaillant sur une source froide (4) à débit thermique limité et insuffisant pour subvenir aux besoins thermiques maximaux d'un réseau (14) d'utilisation de chaleur qui sont fonction d'une grandeur évolutive (Te), procédé caractérisé par le fait que l'on applique séquentiellement deux modes distincts de régulation, le premier mode de régulation étant un pilotage classique de la vitesse du moteur (1) par la température évolutive de réglage (Te) et intervenant lorsque les besoins de chaleur déterminés par cette température évolutive ne dépassent pas les possibilités de la source froide, et le deuxième mode consistant à faire augmenter la température d'entrée (Ts) du réseau de chauffage (14) de manière à dégrader de façon contrôlée le coefficient de performance de la pompe à chaleur.

./...

EP 0 053 953 A2

FIG.1

1

Procédé de régulation d'une pompe à chaleur travaillant sur une source froide à débit thermique limité et dispositif correspondant.

L'invention concerne la régulation d'une pompe à chaleur entraînée par un moteur à vitesse variable, en particulier par un moteur thermique, et travaillant sur une source froide à débit thermique limité.

Ces circonstances se rencontrent chaque fois que la quantité de chaleur à fournir au circuit d'utilisation, relié à la source chaude de la pompe à chaleur, dépend d'une grandeur évolutive. Dans ce cas les techniques connues de mise en oeuvre des pompes à chaleur conduisent à prévoir l'installation d'un chauffage d'appoint destiné à faire face aux besoins maximaux de chaleur qui dépassent les possibilités de la source froide.

D'une manière générale, on sait qu'une grande part des difficultés de mise en oeuvre des pompes à chaleur provient des caractéristiques limitatives de la source froide à laquelle elles sont associées. En particulier, certaines sources froides, comme l'air extrait d'un bâtiment, des effluents à température plus ou moins élevée, certains captages d'eaux souterraines comme des nappes phréatiques ou des eaux géothermales, sont d'exellente qualité à certains égards mais présentent l'inconvénient grave de ne pouvoir fournir qu'une quantité strictement limitée d'énergie thermique récupérable. Il peut d'ailleurs en aller de même pour des sources froides à priori illimitées, mais pour lesquelles d'autres considérations amènent à limiter malgré tout le débit massique du fluide de ces sources. Cette quantité de chaleur n'est en général pas suffisante pour permettre dans toutes les conditions la satisfaction complète des besoins thermiques de la source chaude de la pompe à chaleur.

A cet égard, on peut citer comme exemple les pompes à chaleur travaillant sur l'air extrait des locaux d'habitation et dont la mise en oeuvre s'accompagne pratiquement toujours de l'installation d'un chauffage d'appoint destiné à assurer le complément de puissance de chauffage lors des jours les plus froids de la saison de chauffe.

Les pompes à chaleur à entraînement par moteur thermique elles-mêmes n'échappent en général que partiellement à la nécessité d'une installation complémentaire délivrant l'appoint de chaleur indispensable, malgré l'apport des chaleurs fatales à haut niveau récupérées sur le moteur thermique au niveau du refroidissement des chemises et dans les gaz d'échappement.

Le recours à un dispositif de chauffage d'appoint est générateur le plus souvent de sujétions contraignantes, aussi bien du point de vue de son coût additionnel propre, que de sa compatibilité avec la pompe à chaleur elle-même, en particulier en ce qui concerne les niveaux respectifs de température de sortie du fluide de travail, de la coordination des deux systèmes de régulation par suite de la nécessité d'assurer une priorité rigoureuse de la pompe à chaleur vis-à-vis du dispositif d'appoint, enfin de la dégradation des performances énergétiques de l'ensemble.

Le but de l'invention est de remédier aux inconvénients précités en évitant en particulier le dispositif de chauffage d'appoint.

Le procédé de régulation selon l'invention est essentiellement caractérisé par le fait que le circuit d'utilisation ainsi que le circuit du condenseur de la pompe à chaleur sont équipés chacun d'une boucle de recirculation, au moyen notamment d'une vanne à trois voies utilisée d'une manière particulière, que la température du fluide de travail à la sortie de la pompe à chaleur est constamment régulée à la valeur minimale compatible avec les besoins de chaleur à assurer, que simultanément le prélèvement de chaleur à la source froide est maximalisée pour chaque condition de marche, enfin que lorsque le débit thermique maximal disponible à la source froide est atteint, les besoins supplémentaires à la source chaude sont satisfaits par l'intermédiaire d'une augmentation contrôlée de la température de condensation, les grandeurs réglantes intervenant simultanément sur la vitesse de rotation et le facteur de charge du moteur d'entraînement de la pompe à chaleur.

D'autres particularités de l'invention apparaîtront dans la description qui va suivre d'un mode de mise en oeuvre et de diverses variantes pris comme exemple et représenté sur le dessin annexé, sur lequel :

la fig. 1 est un schéma d'ensemble d'une installation de pompe à chaleur entraînée par moteur thermique et destinée à des fins de chauffage dont l'ampleur des besoins est fonction d'une température évolutive qui peut être par exemple la température extérieure;

les fig. 2 et 3 sont des schémas d'installation de deux variantes de réalisation;

la fig. 4 est le diagramme des courbes d'évolution en fonction de la température évolutive des températures de fluide de chauffage à la sortie de la pompe à chaleur, à l'entrée du circuit de chauffage et au retour du circuit de chauffage;

la fig. 5 est le diagramme de la courbe d'évolution en fonction de la température évolutive de la température du fluide de travail de la source froide en sortie de l'évaporateur de la pompe à chaleur;

la fig. 6 est le diagramme de la courbe d'évolution en fonction de la température évolutive du débit d'alimentation de la boucle du circuit de chauffage;

la fig. 7 est un schéma électrique de la régulation.

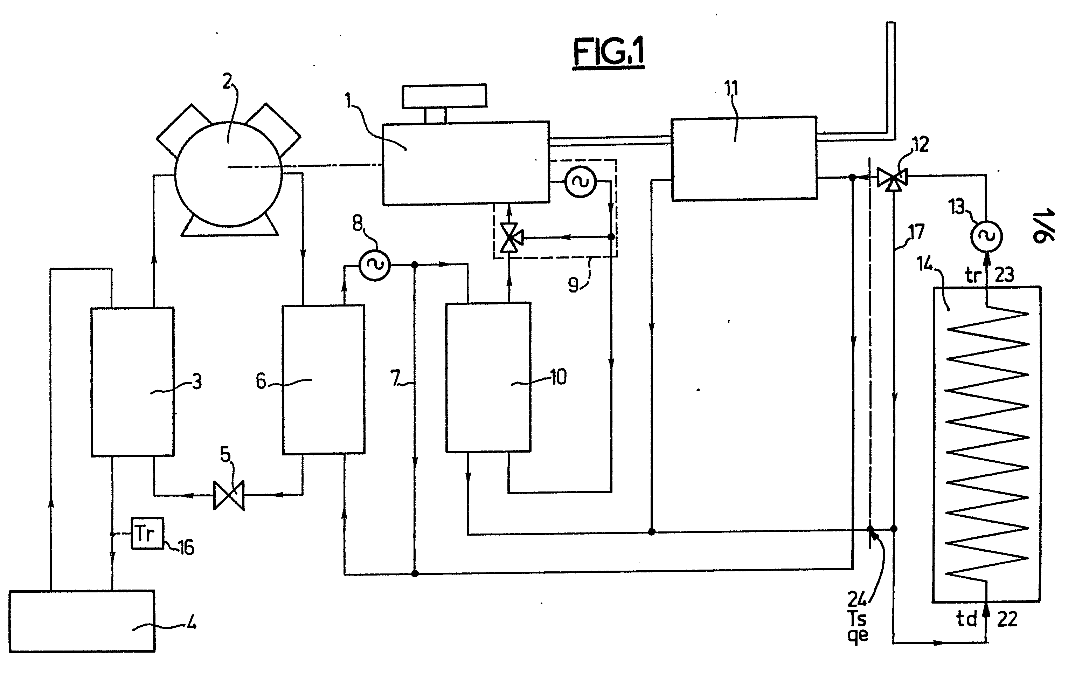

Comme représentée sur la fig. 1, la pompe à chaleur comporte un moteur thermique d'entraînement 1 accouplé à un compresseur frigorifique 2 qui aspire, dans un évaporateur 3, les vapeurs du fluide frigorigène qu'il refoule dans un condenseur 6, l'alimentation de l'évaporateur en liquide frigorigène étant assurée, à partir du condenseur 6, par un détendeur thermostatique 5. L'évaporateur 3 puise l'énergie thermique dans une source froide 4 caractérisée par le fait qu'elle ne peut fournir qu'une quantité maximale strictement limitée d'énergie. A la sortie de l'évaporateur 3, une sonde 16 mesure la température Tr de rejet du fluide de la source froide.

Le moteur thermique 1, qu'on suppose dans cet exemple être du type à refroidissement par eau sans que cela soit limitatif, possède son propre circuit interne de refroidissement 9 avec pompe et thermostat. Ce circuit de refroidissement est branché au primaire d'un échangeur de chaleur 10. De plus, les gaz d'échappement du moteur sont dirigés sur le primaire d'un échangeur 11 avant leur rejet à l'atmosphère, ou encore leur mélange à la source froide, en particulier si cette dernière est constituée par l'air extrait d'un local.

Le circuit d'utilisation finale 14 de la chaleur fonctionne à débit de fluide caloporteur constant grâce à une pompe de circulation 13, tandis qu'une vanne à trois voies motorisée 12, montée en répartition d'une manière connue sur la sortie du circuit d'utilisation 14, alimente d'une part la canalisation de rebouclage 17 et d'autre part les secondaires de l'échangeur 11 et du condenseur 6. Cette double alimentation en parallèle, assurée par le fluide caloporteur à sa température la plus basse, permet ainsi une récupération de chaleur maximale sur les gaz d'échappement d'une part et une température de condensation minimale d'autre part.

Le condenseur fonctionne également à débit constant au secondaire grâce à une seconde pompe de circulation 8 associée à une canalisation de rebouclage 7. La sortie du secondaire du condenseur 6 alimente par cette pompe 8 l'entrée de l'échangeur 10 qui récupère ainsi la chaleur dégagée par le refroidissement du moteur. Les sorties des secondaires des échangeurs 10 et 11 sont collectées pour alimenter l'entrée du circuit d'utilisation 14.

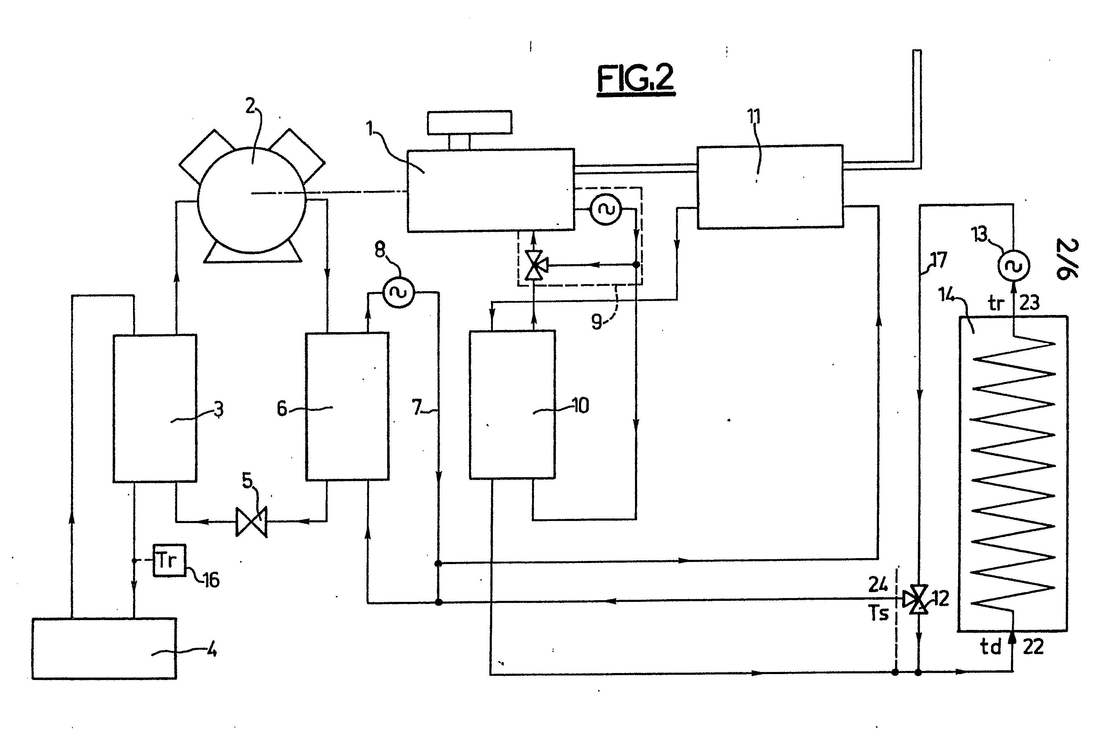

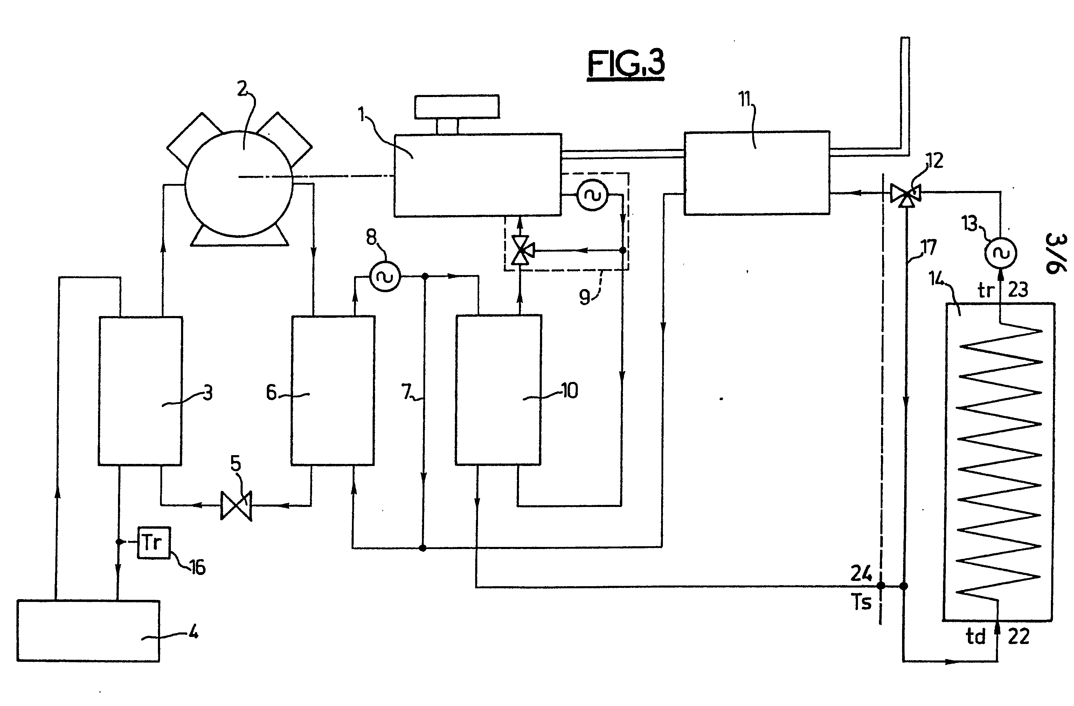

Dans ce cas, qui correspond à la fig. 1, le secondaire de l'échangeur 11 est monté en parallèle avec les secondaires des échangeurs 6 et 10 eux-mêmes montés en série. En variante, on peut, comme dans l'exemple de la fig. 2, monter ces secondaires en série dans l'ordre 6, 11 et 10. On peut également, comme dans la variante représentée sur la fig. 3, monter ces secondaires en série dans l'ordre 11, 6 et 10.

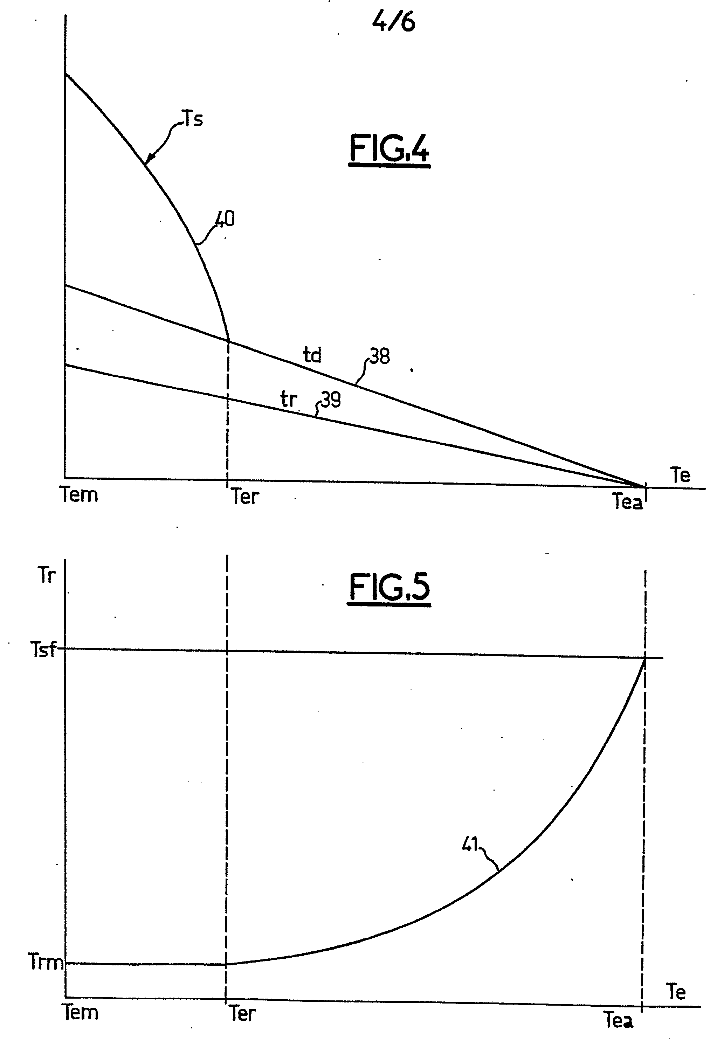

On voit sur la fig. 4 l'évolution des températures caractéristiques de l'installation en fonction de la température évolutive Te, qui est par exemple la température extérieure et qui peut varier entre une valeur minimale Tem et une valeur Tea au-delà de laquelle l'installation de chauffage est arrêtée :

les courbes 38 et 39 figurent les températures du fluide caloporteur, respectivement td à l'entrée 22 et tr à la sortie 23 du circuit dissipateur 14.

La courbe 40 représente l'évolution de la température Ts du fluide caloporteur à l'entrée 24 de la boucle du circuit dissipateur 14.

Les courbes 38 et 40 sont confondues pour les températures Te comprises entre Tea et Ter, alors que la courbe 40 se trouve au-dessus de la courbe 38 pour des températures comprises entre Tem et Ter, cette dernière étant par conséquent la température au-dessous de laquelle la régulation selon l'invention commence à agir conformément à son deuxième mode.

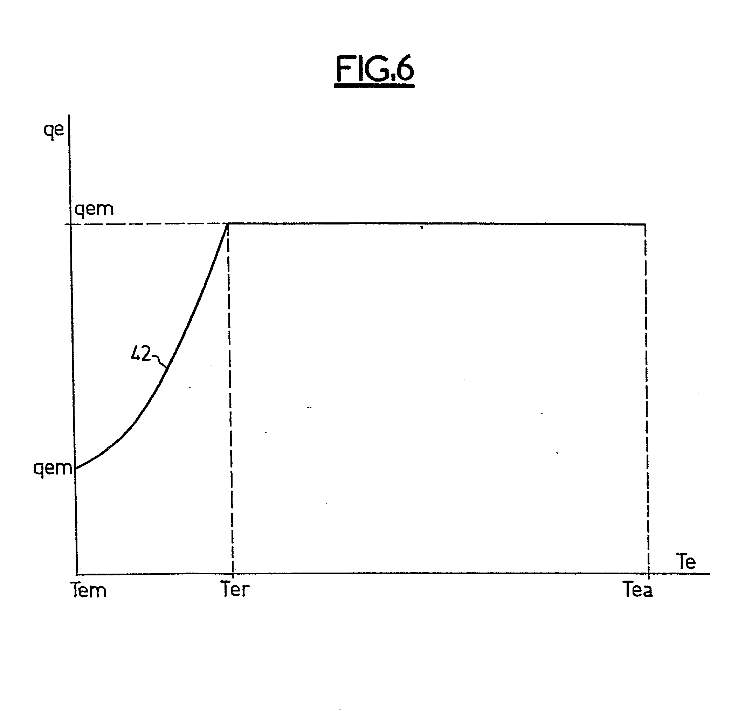

La courbe 41, sur la fig. 5, montre, en correspondance avec les mêmes valeurs de la température évolutive Te, l'évolution de la température Tr (mesurée par la sonde 16) du' fluide de la source froide à la sortie de l'évaporateur 3. Cette température évolue entre une valeur Tsf et une valeur minimale Trm, généralement choisie supérieure à 0°C en raison des problèmes de givrage ou de prise en glace. Entre Tea et Ter, la température Tr évolue en fonction des besoins globaux de chaleur de l'installation, tandis qu'entre Ter et Tem la température Tr demeure constante et est régulée à la valeur Trm.

On voit sur la fig. 6, toujours en fonction des mêmes valeurs caractéristiques de la température évolutive Te, la courbe 42 d'évolution du débit de fluide qe à l'entrée 24 de la boucle du circuit dissipateur 14. Ce débit est constant et égal à la valeur nominale qen déterminée par la pompe 13 pour les températures Te comprise entre Tea et Ter, puis diminue par suite de l'ouverture progressive de la vanne à trois voies 12 jusqu'à une valeur minimale qem pour la valeur minimale Tem de Te.

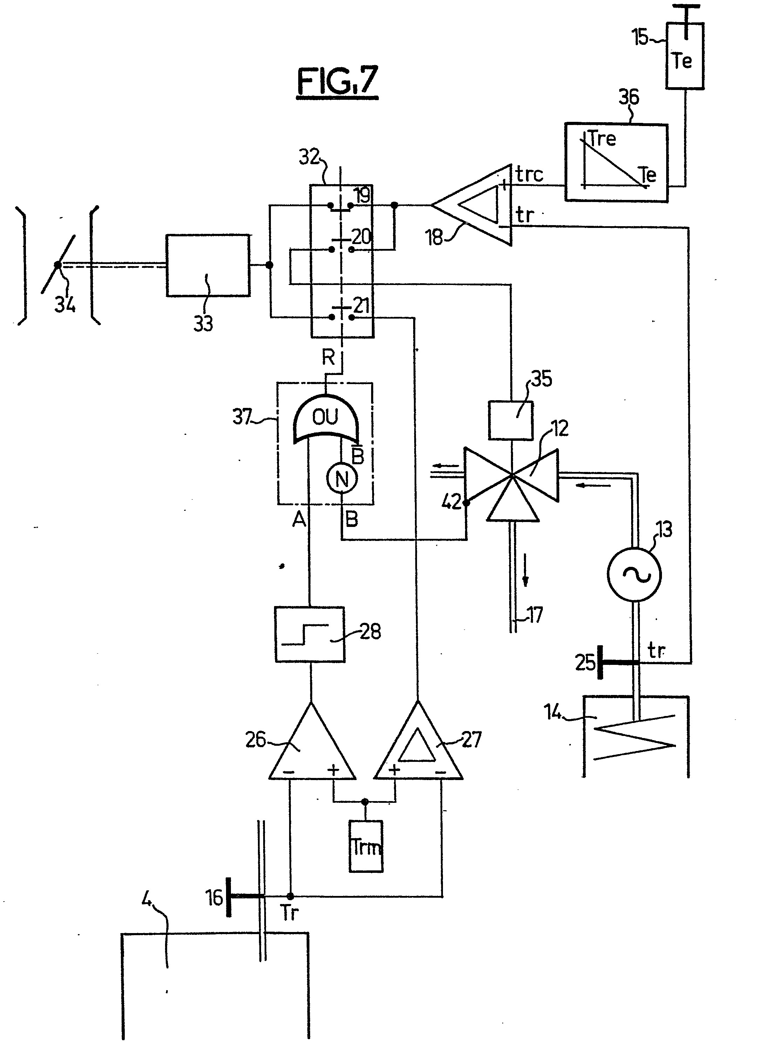

On voit sur la fig. 7 le schéma de la régulation selon l'invention. Sa caractéristique essentielle est d'assurer une modulation contrôlée de la vitesse de rotation du moteur thermique 1. A cet effet, une sonde de température 15 mesure en permanence la température évolutive Te, qui est par exemple la température extérieure. Le signal émis par cette sonde est converti par le générateur de fonction 36 en une valeur de consigne trc qui représente la loi de variation en fonction de Te de la température de retour tr permettant d'assurer la satisfaction des besoins de chauffage du circuit 14. Une sonde de température 25 mesure en permanence la température effective tr, et le signal émis par cette sonde est envoyé à l'entrée inverseuse d'un régulateur 18 recevant sur son entrée directe le signal de consigne trc, et dont la sortie commande, par l'intermédiaire du contact 19 du relais 32, un servomoteur 33 qui actionne l'organe de réglage de puissance 34 du moteur thermique. Cet organe peut être en particulier le papillon des gaz ou de la crémaillère de pompe d'injection selon le type de moteur thermique. Pour une autre position du relais 32, le contact 19 est ouvert et un contact 20 se ferme, permettant au signal de sortie du régulateur 18 de commander, par l'intermédiaire de ce contact 20, un servomoteur 35 actionnant la vanne à trois voies 12, éventuellement à travers un circuit de mise en forme. En l'absence de signal de commande sur le contact 20, la vanne 12 est positionnée en butée par le servomoteur 35 de manière qu'aucune recirculation n'ait lieu dans le conduit 17. La vanne 12 comporte en outre un signal A de fin de course 42 qui délivre par exemple un signal logique + 1 dans cette position en butée, et un signal logique O dès que la vanne quitte cette position et commence à moduler. Ce signal A alimente un circuit logique 37 dont on verra le rôle plus loin.

Par ailleurs, le signal émis par la sonde de température 16, qui mesure en permanence la température de rejet Tr du fluide de la source froide, est dirigé vers le comparateur 26 qui le compare à la température de rejet minimale de consigne Trm. Le signal différentiel issus de 26 attaque une bascule 28 dont le signal de sortie B alimente le circuit logique 37. Par exemple le signal logique B prend la valeur logique + 1 lorsque Tr$<$Trm et la valeur O dans le cas contraire. En outre, un régulateur 27 élabore, à partir du signal émis par la sonde 16 et également de la température minimale de consigne précédente Trm, un signal de régulation qui commande le servomoteur 33 par l'intermédiaire d'un contact 21 du relais 32, ce contact 21 étant fermé, comme le contact 20, lorsque le contact 19 est ouvert et inversement.

Avec les conventions prises comme exemple pour la valeur des signaux A et B, qui ne sont naturellement pas limitatives, et dans le mode de réalisation simplifié à l'extrême qui est représenté à titre d'exemple sur la fig. 7, le circuit logique 37 répond à l'équation logique R = A + $\bar{B}$ dans laquelle le signal de sortie R, commandant le relais 32, se trouve dans l'état zéro pour la position des contacts 19, 20 et 21 représentés sur la fig. 7 (19 fermé, et 20 et 21 ouverts), et à l'état 1 pour la position inverse du relais.

Il s'agit bien entendu d'une configuration minimale, le circuit logique 37 pouvant en outre tenir compte de paramètres supplémentaires et être du type séquentiel, c'est-à-dire tenir compte des états antérieurs de certains des paramètres. Toutefois, pour clarifier l'exposé du fonctionnement, on s'en tiendra dans ce qui suit à la forme simplifiée de réalisation qui précède. Dans ce cas, le circuit logique 37 représentant l'équation logique susvisée peut être constitué par une simple porte OU associée à une de ses entrées à une porte inverseuse N.

Au départ, on suppose tout d'abord un régime de fonctionnement défini par une température extérieure Te comprise entre Tea et Ter. Dans cet état, le relais 32 se trouve dans sa position de repos représentée sur la fig. 7, ce qui implique en premier lieu l'ouverture du contact 20, donc la mise en position de la vanne 12 par le servomoteur 35 dans la position en butée définie plus haut, c'est-à-dire telle que le débit de recirculation dans 17 est nul. On vérifie au passage que dans ces conditions B se trouve à l'état 1, donc $\bar{B}$ à l'état O. En

0053953

8

second lieu, le contact 19 se trouve fermé, et le contact 21 ouvert, de sorte que le servomoteur 33 de réglage de la puissance du moteur thermique 1 se trouve actionné directement par le signal de commande du régulateur 18, élaboré en fonction de l'écart entre la température de retour tr et la température de consigne trc, dont le signal est lui-même élaboré par le générateur de fonction 36 comme exposé plus haut. Dans ce cas, qui correspond au fait que la demande et la disponibilité de chaleur sont spontanément compatibles, l'ensemble fonctionne à la manière d'une régulation ordinaire et trouve son point de fonctionnement en régime stable après mise en température de l'installation.

On suppose maintenant que la température Te s'abaisse progressivement. Sous l'effet du régulateur 18, le servomoteur 33 commande un accroissement de l'ouverture de l'organe 34 de réglage de la puissance du moteur, de sorte que ce dernier tourne plus vite et délivre un couple plus élevé. Corrélativement la puissance frigorifique du compresseur 2 croît et la température Tr de rejet du fluide à la source froide diminue.

Ce dernier processus de régulation se poursuit tant que cette température de rejet Tr reste supérieure à la température limite Trm. Lorsque cette température limite est atteinte, cela signifie que le débit thermique maximal susceptible d'être délivré par la source froide est obtenu. Dans les installations de pompe à chaleur réalisées selon les procédés connus, c'est à partir de ce moment que doit entrer en fonctionnement le dispositif de chauffage d'appoint.

Par contre dans le procédé de régulation selon l'invention la pompe à chaleur continue automatiquement à assurer néanmoins le débit de chaleur nécessaire grâce au changement de mode de régulation qui agit alors de la manière suivante : dès que la température de rejet Tr atteint la valeur limite Trm, la bascule 28 fait passer le signal A de l'état zéro à l'état 1 et excite alors le circuit logique 37 dont le signal de sortie R passe de l'état logique 0 à l'état logique 1 et fait basculer le relais 32 dans la position opposée à celle représentée sur la figure. Ce relais coupe alors le contact 19

9

et ferme simultanément les contacts 20 et 21, ce qui a comme conséquence que le régulateur 18 cesse de commander le servomoteur 33 de l'organe de réglage du moteur et commande au contraire le servomoteur 35 de la vanne 12, tandis que c'est au contraire le régulateur 27 qui commande maintenant le servomoteur 33. Il en résulte donc que :

- la vanne 12 quitte sa position de repos et fait transiter un certain débit dans la canalisation de recirculation 17; la pompe 13 fonctionnant à débit constant, le débit au point 24 à l'entrée de la boucle du circuit de chauffage 14 diminue, de même que le débit d'alimentation de la boucle 6-7-8 du condenseur 6;

- la diminution du débit d'alimentation de la boucle du condenseur 6 entraîne une élévation de la température du fluide de travail en sortie du condenseur, donc une élévation de la pression de condensation du fluide frigorigène, et par suite une augmentation du travail de compression et du taux de compression, ce qui entraîne une chute du rendement volumétrique du compresseur;

- à son tour la chute du rendement volumétrique du compresseur entraîne une diminution de la production frigorifique au niveau de l'évaporateur 3 qui se traduit par une élévation de la température $T_r$ au-dessus de la valeur $T_{rm}$, d'où l'apparition d'un signal d'erreur à l'entrée du régulateur 27 qui élabore alors un ordre d'augmentation de la puissance délivrée par le moteur, lequel ordre est transmis par 21 au servomoteur 33 : la vitesse du moteur augmente ainsi pour compenser la chute du rendement volumétrique et conserver une puissance frigorifique constante, tandis que le couple délivré par le moteur augmente également pour prendre en compte l'augmentation du taux de compression.

Ainsi, la régulation du débit de recirculation dans la canalisation 17 par la vanne 12 impose une température $T_s$ à l'entrée 24 du fluide caloporteur dans la boucle de chauffage (13, 12, 17, 22, 23) qui permet de satisfaire à la loi de régulation définie par le générateur 36; pour respecter cette exigence de température tout en faisant fonctionner la pompe à chaleur à production frigorifique constante, le moteur est contraint de fournir un supplément de puissance qui permet précisément de subvenir aux besoins de puissance thermique du circuit 14, compte tenu de l'apport simultané des chaleurs fatales du moteur aux échangeurs 10 et 11.

En d'autres termes, on peut dire que lorsque les besoins de chaleur dans le circuit d'utilisation atteignent un niveau tel que l'on épuise le débit thermique maximal de la source froide, on consent alors à une dégradation contrôlée du coefficient de performance de la pompe à chaleur, ce qui permet de subvenir aux besoins de chaleur dans le circuit d'utilisation, tout en continuant à épuiser au maximum le débit thermique possible de la source froide.

Ce procédé de régulation d'une pompe à chaleur à régime variable est particulièrement bien adapté au problème du chauffage des locaux, car la période pendant laquelle on est contraint de faire appel à la dégradation du coefficient de performance est relativement courte et peu significative dans le bilan énergétique global de la saison de chauffe, période pendant laquelle on serait de toute façon contraint de fait appel à un système de chauffage d'appoint encore moins performant sur le plan énergétique et constituant en outre un investissement supplémentaire.

Inversement, en cas de remontée de la température extérieure Te, lorsque les besoins en chaleur diminuent, le régulateur 18 entraîne progressivement le retour à l'état initial de la vanne 12, et ce n'est que lorsque le débit de recirculation 17 est complétement annulé que le contact de fin de course 42 fait passer le signal B à l'état logique 1 (donc $\bar{B}$ à l'état logique 0) ce qui permet seulement alors au relais 32 de rebasculer dans la position initiale en vue d'une régulation ordinaire sans dégradation du coefficient de performance.

L'essentiel du procédé se trouve donc matérialisé par le relais inverseur 32 et son circuit logique de commande 37, et bien entendu dans la vanne à trois voies 12 ainsi que la présence des deux servomoteurs 33 et 35 et dans la liaison fonctionnelle entre ces divers organes.

## REVENDICATIONS

1. Procédé de régulation d'une pompe à chaleur (2) disposant d'un moteur d'entraînement à régime variable, en particulier un moteur thermique (1), et travaillant sur une source froide (4) à débit thermique limité et insuffisant pour subvenir aux besoins thermiques maximaux d'un réseau (14) d'utilisation de chaleur qui sont fonction d'une grandeur évolutive (Te),

procédé caractérisé par le fait que l'on applique séquentiellement deux modes distincts de régulation, la transition de l'un à l'autre étant déterminée par la température de rejet (Tr) du fluide de travail de la source froide (4) comparée à une température minimale admissible (Trm); le premier mode de régulation étant un pilotage classique de la vitesse du moteur (1) par la température évolutive de réglage (Te) et intervenant lorsque les besoins de chaleur déterminés par cette température évolutive ne dépassent pas les possibilités de la source froide, c'est-à-dire lorsque la température de rejet (Tr) du fluide de travail de la source froide demeure supérieure à la température minimale admissible (Trm); et le deuxième mode consistant à faire augmenter la température d'entrée (Ts) du réseau de chauffage (14) de manière à dégrader de façon contrôlée le coefficient de performance de la pompe à chaleur, ce qui permet d'injecter par le moteur, à la fois sous la forme de puissance mécanique et sous la forme de chaleur fatale récupérée, le complément d'énergie thermique nécessaire à la satisfaction des besoins du réseau de chauffage, lorsque ces besoins dépassent les possibilités de la source froide, la contrainte de régulation étant alors de fonctionner à la puissance frigorifique maximale et constante correspondant à la température de rejet minimale (Trm) du fluide de travail de la source froide.

2. Procédé selon la revendication 1, caractérisé par le fait que le réseau d'utilisation (14) est du type à recirculation modulée par une vanne à trois voies (12) avec un débit interne constant déterminé par une pompe de circulation (13), l'augmentation de ladite température d'entrée du réseau de chauffage (Ts) étant alors obtenue en agissant sur l'ouverture de ladite vanne (12) pour réduire graduellement le débit externe de la boucle de recirculation au bénéfice du débit de recirculation (17).

3. Procédé selon l'une quelconque des revendications précédentes, applicable au cas où le moteur d'entraînement de la pompe à chaleur est un moteur thermique, caractérisé par le fait que les chaleurs fatales récupérées par le circuit de fluide caloporteur comprennent au moins un récupérateur de chaleur (10) raccordé sur le circuit de refroidissement (9) du moteur et un autre récupérateur de chaleur (11) raccordé sur l'échappement de ce moteur, les secondaires de ces deux échangeurs (10 et 11), ainsi que le secondaire du condenseur (6) de la pompe à chaleur étant raccordés ensemble sur ledit circuit de fluide caloporteur selon un ordre et un mode de branchement appropriés.

4. Dispositif pour la mise en oeuvre du procédé selon l'une quelconque des revendications 2 et 3, et comportant une pompe à chaleur (2, 6, 5, 3) dont l'évaporateur (3) est parcouru au secondaire par un fluide constituant la source froide (4), et dont le circuit d'utilisation (14) est l'aboutissement d'un circuit de fluide caloporteur véhiculant toutes les calories élaborées par le dispositif, . caractérisé par le fait qu'il comporte un servomoteur (33) actionnant le dispositif de réglage de la puissance du moteur (1); un autre servomoteur (35) actionnant l'ouverture modulée d'une vanne à trois voies (12) assurant une recirculation partielle (17) du débit du dissipateur de chaleur (14) déterminé par une pompe de circulation (13); un premier régulateur (18) élaborant, en fonction d'une température de consigne (trc) elle-même élaborée à partir de la température évolutive (Te et 36) ainsi que de la température de retour (tr) sortant du dissipateur de chaleur, un signal matérialisant le besoin de chaleur; un second régulateur (27) élaborant, en fonction de la température (tr) mesurée au niveau du rejet de la source froide et en fonction d'une température de consigne correspondant à la température minimum de rejet admise (Trm), un autre signal représentatif du besoin de limitation du puisage de calories dans cette source froide; enfin un ensemble de commande comportant un circuit logique (37) commandant le fonctionnement d'un relais (32) à plusieurs contacts (19, 20, 21) agencés de manière que, dans un premier mode de régulation, le premier servomoteur (33) soit commandé par le signal de besoin de chaleur sortant du premier régulateur (18), et que, dans un deuxième mode de régulation, ce même servomoteur (33) de réglage de la puissance du moteur soit commandé par le deuxième régulateur (27), tandis que dans ce cas le signal sortant du premier régulateur (18) commande le deuxième servomoteur (35) actionnant la vanne à trois voies (12).

5. Dispositif selon la revendication 4, caractérisé par le fait que ledit circuit logique (37) reçoit d'une part un premier signal logique (A) élaboré par une bascule (28) en fonction du signal reçu d'un comparateur (26) comparant la température de rejet du fluide de la source froide (Tr) avec la même valeur de consigne de température minimale de rejet (Trm), et d'autre part un signal logique (B) fourni par un contact de fin de course (42) sur la vanne (12) et correspondant à la nullité ou à la non nullité du débit dans la canalisation de recirculation (17), ce circuit logique (37) faisant basculer le relais (32) du premier mode au deuxième mode de régulation lorsque la température de rejet (Tr) est au-dessous dudit minimum (Trm), et le maintenant dans cet état basculé tant que la vanne (12) n'est pas revenue en butée dans sa position de recirculation nulle.

0053953

**FIG.1**

# FIG.2

# FIG.3

2

1

11

12

8

13

9

23
tr

3

6

7

10

17

14

5

24
Ts

16
Tr

4

22
td

## FIG.4

Ts

40

td 38

tr 39

Tem    Ter    Tea    Te

## FIG.5

Tr

Tsf

41

Trm

Tem    Ter    Tea    Te

## FIG.6

0053953

# FIG.7